# EUROPÄISCHE PATENTSCHRIFT

(11) **EP 3 074 273 B1**
(45) Veröffentlichungstag und Bekanntmachung des Hinweises auf die Patenterteilung: **30.10.2019**
(21) Anmeldenummer: 14799450.3
(22) Anmeldetag: 17.11.2014
(51) Int. Cl.: B60N 2/58, B60N 2/80

(54) **FAHRZEUGSITZ**
VEHICLE SEAT
SIEGE DE VEHICULE

(30) Priorität: 27.11.2013 DE 102013224194
(43) Veröffentlichungstag der Anmeldung: 05.10.2016
(73) Patentinhaber: Adient Luxembourg Holding S.à r.l., 1855 Luxembourg (LU)
(72) Erfinder: HARTLAUB, Silvio, 50259 Pulheim (DE)
(74) Vertreter: Finger, Catrin
(86) Internationale Anmeldenummer: PCT/EP2014/074792
(87) Internationale Veröffentlichungsnummer: WO 2015/078718

(56) Entgegenhaltungen:
- WO-A1-2012/079762
- US-A- 4 744 601

## Beschreibung

Die Erfindung betrifft einen Fahrzeugsitz mit einer Rückenlehne und einer Kopfstütze, welche einen Kopfstützenkörper umfasst.

Fahrzeugsitze mit höhenverstellbaren Kopfstützen sind aus dem Stand der Technik hinreichend bekannt. Beispielsweise offenbart die WO2013/034332 A2 eine höhenverstellbare Anordnung einer Kopfstütze an einem Fahrzeugsitz. Dabei ist die Kopfstütze oder zumindest ein Kopfstützenpolster der Kopfstütze mittels einer Aufnahmeplatte gestellfest an einem Aufnahmeschlitten eines Höhenverstellmechanismus befestigt, wobei der Aufnahmeschlitten mittels zumindest zweier gegenläufig auf den Aufnahmeschlitten einwirkender Betätigungszüge höhenverschiebbar an zumindest einem Führungselement des Höhenverstellmechanismus angeordnet ist, welcher in oder an einem Halteelement der Kopfstütze angeordnet ist.

Weiterhin ist in der DE 103 35 268 B3 eine geteilte Kopfstütze für den Sitz eines Automobils mit zwei Trägerteilen offenbart, wobei ein erstes Trägerteil mittels Kopfstützenstangen in einer Aufnahme der Rückenlehne des Sitzes aufnehmbar ist und wobei beide Trägerteile mit einer Polsterung versehen sind und zwei Relativpositionen aufweisen. In einer ersten Position ist das zweite Trägerteil nahe dem ersten Trägerteil etwa in gleicher Höhe mit diesem angeordnet. In einer zweiten Position ist das zweite Trägerteil vom ersten Trägerteil in Fahrzeugrichtung entfernt und gegenüber diesem angehoben. Dabei umfasst die Kopfstütze ein Verriegelungselement, mittels welchem das erste Trägerteil in der ersten Position festgelegt wird. Darüber hinaus sind in der DE 101 33 414 A1, der DE 196 43 266 C1 und der DE 100 45 070 A1 Kopfstützen eines Fahrzeugsitzes beschrieben.

Ferner sind in der WO 2012/079762 A1 und in der US 4 744 601 A Kopfstützen für einen Fahrzeugsitz beschrieben, bei denen sich ein Teil der Kopfstütze bei einer Heckkollision verformt.

Aufgabe der vorliegenden Erfindung ist es, einen gegenüber dem Stand der Technik verbesserten Fahrzeugsitz anzugeben.

Die Aufgabe wird erfindungsgemäß mit den Merkmalen des Anspruchs 1 gelöst.

Bei einem Fahrzeugsitz mit einer Rückenlehne und einer Kopfstütze, welche einen Kopfstützenkörper umfasst, weist der Kopfstützenkörper zumindest ein Füllmaterial auf wobei der Kopfstützenkörper zumindest im Bereich einer Kontaktfläche zwischen einem Kopf eines Fahrzeuginsassen und dem Kopfstützenkörper automatisch relativ zur Rückenlehne axial bewegbar ist und wobei der Kopfstützenkörper über ein Halteelement mit der Rückenlehne gekoppelt ist. Erfindungsgemäß ist ein Gleitmedium vorgesehen, welches in zumindest einem Abschnitt zwischen dem Halteelement und dem Füllmaterial eingebracht ist.

Das Halteelement ist beispielsweise axial verschiebbar in der Rückenlehne angeordnet, so dass die Kopfstütze insbesondere höhenverstellbar ausgebildet ist.

Die automatische axiale Relativbewegung des Kopfstützenkörpers zumindest im Bereich der Kontaktfläche entspricht dabei einer Vergrößerung der Längsausdehnung des Kopfstützenkörpers, d. h. einer Dehnung oder einer teilweisen Bewegung des Kopfstützenkörpers in dessen Längsausdehnung.

Bei einer Heckkollision des Fahrzeugs wird der Fahrzeuginsasse von dem Fahrzeugsitz, insbesondere von der Rückenlehne und der Kopfstütze, aufgefangen, wobei bei Auftreffen des Fahrzeuginsassen auf die Rückenlehne ein Kraftimpuls in die Rückenlehne und ggf. in den Kopfstützenkörper eingeleitet wird und aufgrund einer Bewegungsenergie des Fahrzeuginsassen und/oder einer Absenkung der Rückenlehne in Fahrzeughochrichtung eine axiale Bewegung des Fahrzeuginsassen in Fahrzeughochrichtung nach oben erfolgen kann, welche durch einen hohen Schubwiderstand zwischen dem Kopf des Fahrzeuginsassen und des Kopfstützenkörpers zu einer Drehung des Kopfes relativ zum Körper in Richtung des Kopfstützenkörpers und damit zu hohen Belastungen des Hinterkopfes und der Halswirbelsäule des Fahrzeuginsassen führen kann.

Die axiale Relativbewegung des Kopfstützenkörpers in dessen Längsausdehnung ist dabei abhängig vom eingeleiteten Kraftimpuls, wobei der Kopfstützenkörper zumindest im Bereich einer Kontaktfläche zwischen dem Kopf des Fahrzeuginsassen und des Kopfstützenkörpers der oben beschriebenen axialen Bewegung des Fahrzeuginsassen und damit einer axialen Bewegung des Kopfes des Fahrzeuginsassen folgt. Mit anderen Worten: Der Kopfstützenkörper wird zumindest im Bereich der Kontaktfläche entsprechend einer Bewegungsrichtung des Fahrzeuginsassen nach oben oder nach unten bewegt oder gedehnt. Damit ist ein auf die Kontaktfläche des Kopfstützenkörpers, durch die Bewegung des Fahrzeuginsassen, wirkender Schubwiderstand verringerbar, so dass biomechanische Belastungen insbesondere am Kopf und an der Halswirbelsäule des Fahrzeuginsassen verringerbar sind. Die axiale Relativbewegung des Kopfstützenkörpers kann dabei nicht vom Fahrzeuginsassen selbst bestimmt oder eingestellt werden.

Gemäß einem Ausführungsbeispiel des Kopfstützenkörpers weist dieser einen Kopfstützenbezug auf, welcher das Füllmaterial umhüllt.

Gemäß einem Ausführungsbeispiel ist das Füllmaterial vorzugsweise aus einem elastischen Material, wie z. B. Schaumstoff, gebildet und mit mindestens einer Aussparung an einer vorderen und/oder oberen und/oder seitlichen Oberfläche versehen, wodurch eine automatische, axiale Relativbewegung des Füllmaterials in Längsausdehnung des Kopfstützenkörpers verbessert ist. Zudem ist ein Gewicht des Kopfstützenkörpers dabei verringert. Beispielsweise weist das Füllmaterial eine Vielzahl von Aussparungen auf, welche in Form von horizontalen oder vertikalen Einschnitten in die vordere, d.h. dem Fahrzeuginsassen zugewandte, Oberfläche eingebracht sind. Alternativ kann das Füllmaterial auch eine vergleichsweise großflächige Aussparung im Bereich der Kontaktfläche aufweisen, wodurch dieses im vorderen Bereich des Kopfstützenkörpers insbesondere mittig geschwächt ist. Unter einer Aussparung kann hierbei auch eine Verjüngung und/oder eine Dickenreduzierung des Füllmaterials verstanden werden. Der Kopfstützenbezug ist vorzugsweise zumindest im Bereich der Kontaktfläche aus einem elastischen Material gebildet, so dass eine gemeinsame automatische Relativbewegung des Füllmaterials und des Kopfstützenbezugs in Längsausdehnung des Kopfstützenkörpers möglich ist. Die axiale Relativbewegung des Füllmaterials entspricht dabei einer Dehnung des Füllmaterials in axiale Richtung, insbesondere in Längsausdehnung des Kopfstützenkörpers.

Vorzugsweise ist das Halteelement aus einem vorgebbaren, biegesteifen Material gebildet, z. B. aus einem Kunststoff, so dass eine automatische, axiale Bewegung des Füllmaterials und gegebenenfalls des Kopfstützenbezugs in Längsausdehnung des Kopfstützenkörpers relativ zu dem Halteelement möglich ist.

In allen zuvor beschriebenen Ausführungsbeispielen sind der Kopfstützenbezug und/oder das Füllmaterial zumindest im Bereich der Kontaktfläche vorzugsweise aus einem elastischen Material gebildet.

Das Gleitmedium ist beispielsweise ein Schmiermittel und/oder eine Gleitfolie, mittels dessen ein Schubwiderstand zwischen dem Kopf des Fahrzeuginsassen und der Kontaktfläche des Kopfstützenkörpers minimierbar ist. Denkbar ist auch, das Füllmaterial zumindest teilweise aus einem gleitfähigen Schaum zu formen, welcher das Gleitmedium bildet.

In einer weiteren Ausgestaltung der Erfindung ist ein zusätzliches Gleitmedium vorgesehen, welches in zumindest einem Abschnitt zwischen dem Füllmaterial und dem Kopfstützenbezug eingebracht ist, so dass der Kopfstützenbezug und das Füllmaterial zumindest im Bereich der Kontaktfläche automatisch relativ zur Rückenlehne axial bewegbar sind. Dadurch, dass zwei Komponenten des Kopfstützenkörpers axial bewegbar sind, ist eine verbesserte Verringerung des Schubwiderstands an der Kontaktfläche des Kopfstützenkörpers möglich.

Es ist gemäß einer Alternative zur Erfindung auch möglich, dass das Gleitmedium lediglich in zumindest einem Abschnitt zwischen dem Füllmaterial und dem Kopfstützenbezug angeordnet ist und dass zwischen dem Halteelement und dem Füllmaterial kein Gleitmedium eingebracht ist. Diese alternative Ausgestaltung ist mit allen vorgenannten Ausgestaltungen kombinierbar und besonders einfach herstellbar.

Ausführungsbeispiele der Erfindung werden im Folgenden anhand von Zeichnungen näher erläutert.

Dabei zeigen:
- Figur 1: schematisch eine Seitenansicht eines Fahrzeugsitzes mit einer Kopfstütze und einem auf dem Fahrzeugsitz angeordneten Fahrzeuginsassen,
- Figur 2: schematisch eine perspektivische Ansicht einer teilweisen Schnittdarstellung der Kopfstütze des Fahrzeugsitzes,
- Figur 3: schematisch eine Schnittdarstellung der Kopfstütze gemäß Figur 2 in einer Seitenansicht, und
- Figur 4: schematisch eine weitere Schnittdarstellung einer Kopfstütze in einer beispielhaften Ausführungsform in einer Vorderansicht.

Einander entsprechende Teile sind in allen Figuren mit den gleichen Bezugszeichen versehen.

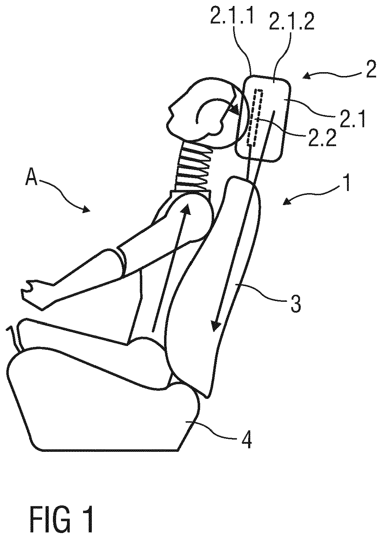

Die Figur 1 zeigt in einer Seitenansicht einen Fahrzeugsitz 1 eines nicht näher dargestellten Fahrzeugs mit einer halb transparent dargestellten Kopfstütze 2, einer Rückenlehne 3 und einem Sitzteil 4.

Die Kopfstütze 2 umfasst im vorliegenden Ausführungsbeispiel einen Kopfstützenkörper 2.1 und ein den Kopfstützenkörper 2.1 haltendes Halteelement 2.2, in der vorliegenden Darstellung gestrichelt dargestellt, welches vorzugsweise aus einem biegesteifen Material wie z. B. Kunststoff gebildet ist. Beispielsweise ist das Halteelement 2.2 aus zwei Rundstäben gebildet und an einem oberen Ende der Rückenlehne 3 angeordnet. Das Halteelement 2.2 ist dabei in korrespondierend geformte Aufnahmemittel in der Rückenlehne 3 axial einschiebbar, so dass in Abhängigkeit einer Eintauchtiefe des Halteelements 2.2 eine Höhe der Kopfstütze 2 von einem Fahrzeuginsassen A manuell oder elektronisch einstellbar ist. Alternativ kann das Halteelement 2.2 auch kastenförmig geformt und/oder aus einem Hartschaum gebildet sein.

An einer Außenseite des Kopfstützenkörpers 2.1 ist ein Kopfstützenbezug 2.1.1 vorgesehen, welcher einen Innenraum des Kopfstützenkörpers 2.1 begrenzt. Der Innenraum ist mit einem Füllmaterial 2.1.2, z. B. ein Schaumstoff, befüllt.

Auf dem Fahrzeugsitz 1 befindet sich ein Fahrzeuginsasse A. Die vorliegende Ansicht zeigt dabei insbesondere eine Position des Fahrzeuginsassen A auf dem Fahrzeugsitz 1 nach einer Heckkollision des Fahrzeugs.

Wie bereits eingangs beschrieben, wird ein Fahrzeuginsasse A nach einer Heckkollision des Fahrzeugs durch den Fahrzeugsitz 1, insbesondere durch die Rückenlehne 3 und die Kopfstütze 2, aufgefangen, wobei ein Kraftimpuls in die Rückenlehne 3 und ggf. in den Kopfstützenkörper 2.1 eingeleitet wird und aufgrund einer Bewegungsenergie des Fahrzeuginsassen A und/oder einer Absenkung der Rückenlehne 3 in Fahrzeughochrichtung eine axiale Bewegung des Fahrzeuginsassen A in Fahrzeughochrichtung nach oben erfolgt, was durch einen in Richtung der Kopfstütze 2 zeigenden, linearen Pfeil angedeutet ist. Ein dabei zwischen dem Kopf des Fahrzeuginsassen A und des Kopfstützenkörpers 2.1 wirkender Schubwiderstand kann zu einer Drehung des Kopfes relativ zum Körper in Richtung des Kopfstützenkörpers 2.1 und damit zu hohen Belastungen des Hinterkopfes und der Halswirbelsäule des Fahrzeuginsassen A führen, was in der vorliegenden Darstellung mit einem gebogenen Pfeil dargestellt ist.

Zur Verringerung des Schubwiderstands und damit zur Verringerung biomechanischer Belastungen am Kopf und an der Halswirbelsäule des Fahrzeuginsassen A bei Heckkollisionen ist der Kopfstützenkörper 2.1 automatisch bei Auffangen des Fahrzeuginsassen A und einer daraus resultierenden Bewegung desselben in Fahrzeughochrichtung zumindest im Bereich einer Kontaktfläche zwischen dem Kopf des Fahrzeuginsassen A und dem Kopfstützenkörper 2.1 automatisch relativ zum Halteelement 2.2 axial, insbesondere in Längsausdehnung der Kopfstütze 2, bewegbar.

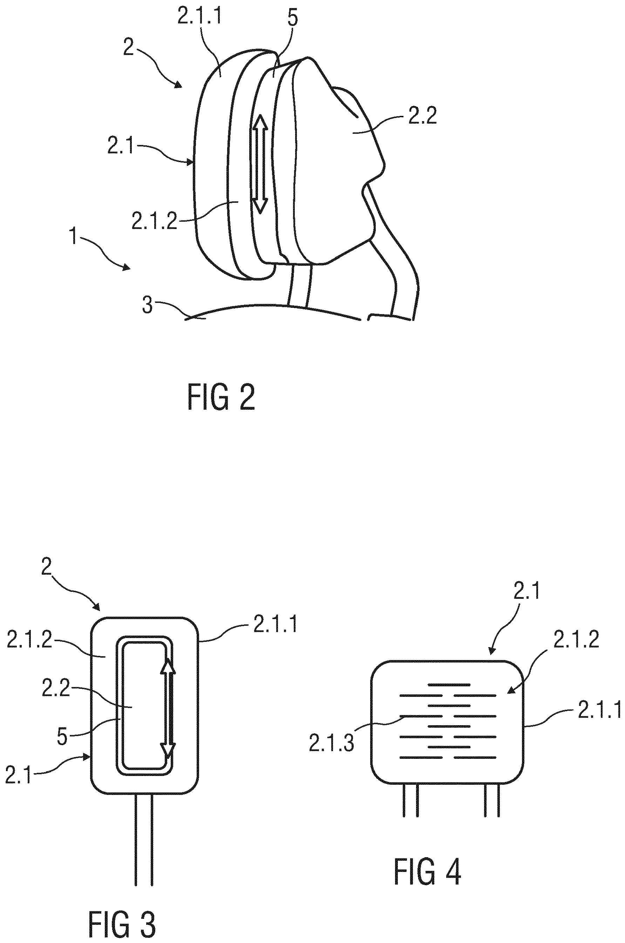

Dazu zeigen die Figuren 2 und 3 eine erfindungsgemäße Ausführungsform der Kopfstütze 2, wobei die Kopfstütze 2 in Figur 2 in einer perspektivischen Ansicht in einer teilweise Schnittdarstellung dargestellt ist. Figur 3 zeigt die Kopfstütze 2 gemäß Figur 2 in einer Schnittdarstellung, insbesondere in einem Querschnitt.

Zwischen dem Füllmaterial 2.1.2 und dem Halteelement 2.2 ist hierbei ein Gleitmedium 5 angeordnet, welches beispielsweise als ein Gleitgel, ein Schmieröl oder als eine Gleitfolie ausgebildet ist. Damit ist ein Reibungskoeffizient zwischen dem Füllmaterial 2.1.2 und dem Halteelement 2.2 verringert, so dass der Kopfstützenbezug 2.1.1 und das Füllmaterial 2.1.2 in Längsausdehnung des Kopfstützenkörpers 2.1 automatisch relativ zum Halteelement 2.2 bewegbar sind.

Die automatische, axiale Relativbewegung des Füllmaterials 2.1.2 entspricht dabei einer Dehnung des Füllmaterials 2.1.2 in axialer Richtung, insbesondere in Längsausrichtung der Kopfstütze 2, wie es in den Figuren 2 und 3 mit einem doppelseitigen Pfeil dargestellt ist.

Die axiale Relativbewegung des Kopfstützenbezugs 2.1.1 entspricht einer Dehnung desselben in Längsausdehnung der Kopfstütze 2, insbesondere in Fahrzeughochrichtung.

Weiterhin ist der Kopfstützenbezug 2.1.1 zumindest im Bereich der Kontaktfläche aus einem elastischen Material geformt, z. B. ein Material aus Polyamid, welches vorzugsweise einen sehr geringen Elastizitätsmodul aufweist.

Ein Schubwiderstand zwischen dem Kopf des Fahrzeuginsassen A und des Kopfstützenbezugs 2.1.1 kann damit verringert werden, so dass die Dehnung des Kopfstützenbezugs 2.1.1 einer axialen Bewegung des Fahrzeuginsassen A und damit einer Bewegung des Kopfes des Fahrzeuginsassen A nach einer Heckkollision in Abhängigkeit des Elastizitätsmoduls zumindest teilweise folgen kann.

Figur 4 zeigt eine weitere mögliche Ausführungsform der Kopfstütze 2, wobei der Kopfstützenkörper 2.1 in einer Schnittdarstellung, insbesondere im Längsschnitt, dargestellt ist.

Das Füllmaterial 2.1.2 weist an der vorderen Oberflächenseite eine Vielzahl von Aussparungen 2.1.3 auf, welche als horizontale Einschnitte in das Füllmaterial 2.1.2 eingebracht sind. Alternativ können die Aussparungen 2.1.3 auch in jeder anderen geeigneten Form ausgebildet sein.

Die Aussparungen 2.1.3 bedingen eine entsprechende Schwächung des Füllmaterials 2.1.2 an der vorderen Oberflächenseite, so dass eine Dehnung des Füllmaterials 2.1.2 - gegenüber einem Füllmaterial 2.1.2 ohne solche Aussparungen 2.1.3 - erleichtert ist.

In einer weiteren, nicht gezeigten Ausführungsform ist zwischen dem Füllmaterial 2.1.2 und dem Kopfstützenbezug 2.1.1 ein zusätzliches Gleitmedium angeordnet, welches ebenfalls als ein Gleitgel, ein Schmieröl oder als eine Gleitfolie ausgebildet ist. Dabei können das Gleitmedium 5 zwischen dem Füllmaterial 2.1.2 und dem Halteelement 2.2 und das zusätzliche Gleitmedium zwischen dem Füllmaterial 2.1.2 und dem Kopfstützenbezug 2.1.1 gleich oder verschieden ausgebildet sein. Beispielsweise sind beide Gleitmedien 5 als Gleitfolie ausgebildet.

Darüber hinaus ist es auch möglich, das Füllmaterial 2.1.2 zumindest teilweise aus einem gleitfähigen Schaum zu bilden, welcher das Gleitmedium 5 bildet. Dabei ist es auch möglich, dass eine axiale Relativbewegung des Füllmaterials 2.1.2 einer in Längsausdehnung der Kopfstütze 2 gerichteten Bewegung einer dem Fahrzeuginsassen A zugewandten Komponente des Füllmaterials 2.1.2 entspricht.

### Bezugszeichenliste

- 1: Fahrzeugsitz
- 2: Kopfstütze
- 2.1: Kopfstützen körper
- 2.1.1: Kopfstützenbezug
- 2.1.2: Füllmaterial
- 2.1.3: Aussparungen
- 2.2: Halteelement
- 3: Rückenlehne
- 4: Sitzteil
- 5: Gleitmedium

- A: Fahrzeuginsasse

## Patentansprüche

1. Fahrzeugsitz (1) mit einer Rückenlehne (3) und einer Kopfstütze (2), welche einen Kopfstützenkörper (2.1) umfasst, der zumindest ein Füllmaterial (2.1.2) aufweist, wobei der Kopfstützenkörper (2.1) über ein Halteelement (2.2) mit der Rückenlehne (3) gekoppelt ist, und der Kopfstützenkörper (2.1) zumindest im Bereich einer Kontaktfläche zwischen einem Kopf eines Fahrzeuginsassen (A) und dem Kopfstützenkörper (2.1) automatisch relativ zu der Rückenlehne (3) axial bewegbar ist,
**dadurch gekennzeichnet, dass** ein Gleitmedium (5) vorgesehen ist, welches in zumindest einem Abschnitt zwischen dem Halteelement (2.2) und dem Füllmaterial (2.1.2) derart eingebracht ist, dass das Füllmaterial (2.1.2) zumindest im Bereich der Kontaktfläche in eine sich in Fahrzeughochrichtung erstreckende Längsausdehnung des Kopfstützenkörpers (2.1) automatisch relativ zum Halteelement (2.2) bewegbar ist.

2. Fahrzeugsitz (1) nach Anspruch 1,
**dadurch gekennzeichnet, dass** der Kopfstützenkörper (2.1) zumindest im Bereich der Kontaktfläche durch einen auf die Rückenlehne (3) und/oder den Kopfstützenkörper (2.1) einwirkenden Kraftimpuls relativ zu der Rückenlehne (3) axial bewegbar ist.

3. Fahrzeugsitz (1) nach Anspruch 1 oder 2,
**dadurch gekennzeichnet, dass** das Füllmaterial (2.1.2) zumindest im Bereich der Kontaktfläche automatisch relativ zu der Rückenlehne (3) axial bewegbar ist.

4. Fahrzeugsitz (1) nach einem der vorhergehenden Ansprüche,
**dadurch gekennzeichnet, dass** das Füllmaterial (2.1.2) an einer vorderen und/oder oberen und/oder seitlichen Oberfläche mit mindestens einer Aussparung (2.1.3) versehen ist.

5. Fahrzeugsitz (1) nach einem der vorhergehenden Ansprüche,
**dadurch gekennzeichnet, dass** das Halteelement (2.2) aus einem vorgebbaren, biegesteifen Material gebildet ist.

6. Fahrzeugsitz (1) nach einem der vorhergehenden Ansprüche,
**dadurch gekennzeichnet, dass** ein Kopfstützenbezug (2.1.1) und/oder das Füllmaterial (2.1.2) zumindest im Bereich der Kontaktfläche aus einem elastischen Material gebildet sind bzw. ist.

7. Fahrzeugsitz (1) nach einem der vorhergehenden Ansprüche,
**dadurch gekennzeichnet, dass** das Gleitmedium (5) als eine Gleitfolie, ein Gleitgel oder als ein Schmiermittel ausgebildet ist.

8. Fahrzeugsitz (1) nach einem der vorhergehenden Ansprüche,
**dadurch gekennzeichnet, dass** ein zusätzliches Gleitmedium vorgesehen ist, welches in zumindest einem Abschnitt zwischen dem Füllmaterial (2.1.2) und dem Kopfstützenbezug (2.1.1) eingebracht ist.

## Claims

1. Vehicle seat (1) having a backrest (3) and a headrest (2) which comprises a headrest body (2.1) which has at least one filling material (2.1.2), wherein the headrest body (2.1) is connected to the backrest (3) via a retention element (2.2) and the headrest body (2.1) is automatically axially movable relative to the backrest (3) at least in the region of a contact face between a head of a vehicle occupant (A) and the headrest body (2.1), **characterized in that** a sliding medium (5) is provided which is introduced in at least one portion between the retention element (2.2) and the filling material (2.1.2) such that the filling material (2.1.2) is automatically movable relative to the retention element (2.2) at least in the region of the contact face in a longitudinal extent of the headrest body (2.1) which extends in the vertical direction of the vehicle.

2. Vehicle seat (1) according to Claim 1, **characterized in that** the headrest body (2.1) is axially movable relative to the backrest (3) at least in the region of the contact face by a force pulse which acts on the backrest (3) and/or the headrest body (2.1).

3. Vehicle seat (1) according to Claim 1 or 2, **characterized in that** the filling material (2.1.2) is automatically axially movable relative to the backrest (3) at least in the region of the contact face.

4. Vehicle seat (1) according to one of the preceding claims,
**characterized in that** the filling material (2.1.2) is provided at a front and/or upper and/or lateral surface with at least one recess (2.1.3).

5. Vehicle seat (1) according to one of the preceding claims,
**characterized in that** the retention element (2.2) is formed from a predeterminable, flexurally rigid material.

6. Vehicle seat (1) according to one of the preceding claims,
**characterized in that** a headrest cover (2.1.1) and/or the filling material (2.1.2) are/is formed at least in the region of the contact face from a resilient material.

7. Vehicle seat (1) according to one of the preceding claims,
**characterized in that** the sliding medium (5) is constructed as a sliding film, a sliding gel or as a lubricant.

8. Vehicle seat (1) according to one of the preceding claims,
**characterized in that** an additional sliding medium is provided which is introduced in at least one portion between the filling material (2.1.2) and the headrest cover (2.1.1).

## Revendications

1. Siège de véhicule (1), comprenant un dossier (3) et un appui-tête (2), lequel comporte un corps d'appui-tête (2.1) qui possède au moins un matériau de remplissage (2.1.2), le corps d'appui-tête (2.1) étant accouplé au dossier (3) par le biais d'un élément de maintien (2.2) et le corps d'appui-tête (2.1) pouvant être déplacé automatiquement dans le sens axial par rapport au dossier (3), au moins dans la zone d'une surface de contact entre une tête d'un passager de véhicule (A) et le corps d'appui-tête (2.1),
**caractérisé en ce qu'**un milieu de glissement (5) est présent, lequel est incorporé dans au moins une portion entre l'élément de maintien (2.2) et le matériau de remplissage (2.1.2) de telle sorte que le matériau de remplissage (2.1.2) peut être déplacé automatiquement par rapport à l'élément de maintien (2.2) au moins dans la zone de la surface de contact dans une extension longitudinale du corps d'appui-tête (2.1) qui s'étend dans le sens de la hauteur du véhicule.

2. Siège de véhicule (1) selon la revendication 1, **caractérisé en ce que** le corps d'appui-tête (2.1) peut être déplacé dans le sens axial par rapport au dossier (3) au moins dans la zone de la surface de contact par une impulsion de force agissant sur le dossier (3) et/ou sur le corps d'appui-tête (2.1).

3. Siège de véhicule (1) selon la revendication 1 ou 2, **caractérisé en ce que** le matériau de remplissage (2.1.2) peut être déplacé automatiquement par rapport au dossier (3) au moins dans la zone de la surface de contact.

4. Siège de véhicule (1) selon l'une des revendications précédentes, **caractérisé en ce que** le matériau de remplissage (2.1.2) est pourvu d'au moins un évidement (2.1.3) au niveau d'une surface avant et/ou supérieure et/ou latérale.

5. Siège de véhicule (1) selon l'une des revendications précédentes, **caractérisé en ce que** l'élément de maintien (2.2) est formé d'un matériau résistant à la flexion pouvant être prédéfini.

6. Siège de véhicule (1) selon l'une des revendications précédentes, **caractérisé en ce qu'**un revêtement d'appui-tête (2.1.1) et/ou le matériau de remplissage (2.1.2) sont ou est formé d'un matériau élastique, au moins dans la zone de la surface de contact.

7. Siège de véhicule (1) selon l'une des revendications précédentes, **caractérisé en ce que** le milieu de glissement (5) est réalisé sous la forme d'un film de glissement, d'un gel glissant ou sous la forme d'un lubrifiant.

8. Siège de véhicule (1) selon l'une des revendications précédentes, **caractérisé en ce qu'**un milieu de glissement supplémentaire est présent, lequel est incorporé dans au moins une portion entre le matériau de remplissage (2.1.2) et le revêtement d'appui-tête (2.1.1).
